# EUROPÄISCHE PATENTANMELDUNG

(11) **EP 1 138 564 A2**
(43) Veröffentlichungstag der Anmeldung: **04.10.2001**
(21) Anmeldenummer: 01105623.1
(22) Anmeldetag: 07.03.2001
(51) Int. Cl.: B60T 8/32, B60T 13/74, B60T 7/04

(54) **Elektromechanische Fahrzeug-Bremsanlage**

(30) Priorität: 29.03.2000 DE 10015714
(71) Anmelder: Bayerische Motoren Werke Aktiengesellschaft, 80809 München (DE)
(72) Erfinder: Kufner, Thomas, 85221 Dachau (DE); Vielwerth, Gerhard, 91795 Obereichstätt (DE)

(57) **Zusammenfassung**

Die Erfindung betrifft eine elektromechanische Fahrzeug-Bremsanlage mit elektronischer Übertragung eines mittels eines Bremspedales ausgelösten Bremsvorganges auf eine bevorzugt am Fahrzeugrad vorgesehene Bremse, sowie mit einer Schlupfregelfunktion, die bei Auftreten von Radschlupf eine von der Bremspedalbetätigung abweichende Bremsen-Betätigung hervorruft, wobei bei Aktvierung einer derartigen Schlupfregelfunktion am Bremspedal ein Reaktionsverhalten erzeugbar ist, wie es ansonsten bei einer hydraulischen Fahrzeug-Bremsanlage üblich ist. Bevorzugt ist dieses Reaktionsverhalten in einem sog. Pedalsimulator erzeugbar, und zwar mittels eines Vibrators oder eines Pieozoelementes. Dabei kann die Generierung des genannten Reaktionsverhaltens wahlweise unterbindbar sein und das einer aktiven Schlupfregelfunktion bei einer hydraulischen Bremsanlage entsprechende Reaktionsverhalten im Vergleich hierzu verstärkt oder abgeschwächt werden. Ferner kann mit dem genannten Reaktionsverhalten auch auf systeminterne Abweichungen oder Fehler hingewiesen werden.

## Beschreibung

Die Erfindung betrifft eine elektromechanische Fahrzeug-Bremsanlage mit elektronischer Übertragung eines mittels eines Bremspedales ausgelösten Bremsvorganges auf eine bevorzugt am Fahrzeugrad vorgesehene Bremse, sowie mit einer Schlupfregelfunktion, die bei Auftreten von Radschlupf eine von der Bremspedalbetätigung abweichende Bremsen-Betätigung hervorruft. Zum technischen Umfeld wird beispielshalber auf die DE 198 53 036 A1, auf die DE 198 38 568 C1, sowie auf die DE 44 24 094 C1 verwiesen.

Insbesondere an Personenkraftwagen sind heute noch die hydraulischen Bremsanlagen üblich, bei denen der Fahrzeugführer zur Einleitung eines Bremsvorganges ein Bremspedal betätigt, dessen Verlagerung unter Zwischenschaltung eines Unterdruck- oder eines hydraulischen Bremskraftverstärkers hydraulisch, d.h. durch Fluidverschiebung eine Bremsbetätigung initiiert, d.h. letztlich die Bremsbeläge gegen eine Bremsscheibe oder dgl. presst. Weit verbreitet sind auch Zusatzfunktionen, insbesondere ein sog. Antiblockiersystem, mit welchem ein Schlupf des Fahrzeugrades bei einem Bremsvorgang weitestgehend verhindert wird. Bekanntermaßen wird durch pulsierenden Druckabbau und anschießenden Druckaufbau im Hydrauliksystem der Bremsanlage eine Bremskraft solcher Höhe eingestellt, daß das gebremste Fahrzeugrad gerade eben nicht auf der Straße dahingleitet, so daß die maximal mögliche Bremskraft übertragen wird.

Lediglich der Vollständigkeit halber wird hierzu auf die o.g. DE 44 24 094 C1 verwiesen, in der ein Verfahren und eine Vorrichtung zur Überprüfung eines Antiblockiersystems (ABS) bei druckmittelbetätigten Fahrzeugbremsen anhand des aktuellen Bremsdrucks im System beschrieben ist. Bei dieser bekannten Überprüfung wird ausgenützt, daß sich die von der Steuereinheit des ABS auf die einzelnen Bremdsdruck-Steuerventile ausgeübten Regelzyklen, die den pulsierenden Druckabbau und -aufbau bewirken, auch am Bremspedal selbst durch sog. Flatterbewegungen (bzw. ein vergleichbares Pulsieren) bemerkbar machen. Bei diesem bekannten Verfahren wird somit die Betätigungsfrequenz zumindest eines einem Rad zugeordneten Steuerventils bei Ansprechen des ABS am Bremspedal selbst als bremsdruckabhängige Pedalwegänderung gemessen.

Unabhängig von dieser DE 44 24 094 C1 sei im übrigen noch darauf hingewiesen, daß bei den hydraulischen Fahrzeug-Bremsanlagen der Fahrzeug-führer bei einer Bremsbetätigung sowie bei aktivem Antiblockiersystem, welches allgemein eine Schlupfregelfunktion darstellt, am Bremspedal selbst diese aktive Schlupfregelfunktion verspürt, und zwar durch eine leicht pulsierende Bremspedalbewegung. Diese sog. haptische Rückmeldung kann für den Fahrzeugführer eine wertvolle Information darstellen, da er hiermit deutlich darauf hingewiesen wird, daß die Gefahr von Radschlupf besteht, d.h. daß eine verminderte Haftreibung zwischen Rad und Straße vorliegt, so daß der Fahrzeugführer seine Fahrweise diesen kritischen Straßenverhältnissen anpassen kann. Selbstverständlich könnte diese Information dem Fahrzeugführer auch auf optischem Wege mitgeteilt werden, jedoch besteht dabei die Gefahr, daß er vom Verkehrsgeschehen um ihn herum abgelenkt wird, was bei einer haptischen Rückmeldung über ein pulsierendes Bremspedal, an welche sich im übrigen die meisten Fahrzeugführer bereits gewöhnt haben, nicht der Fall ist.

Derzeit befinden sich sog. elektromechanische Fahrzeug-Bremsanlagen oder allgemein das sog. brake-by-wire" in Entwicklung. Hierzu wird beispielshalber auf die eingangs erstgenannte DE 198 53 036 A1 verwiesen. Dabei wird der weiterhin mittels eines Bremspedales initiierte Bremsvorgang auf elektronischen Wege an die Fahrzeug-Bremse übermittelt, wo ein elektrischer Stellmotor oder dgl. den eigentlichen Bremsvorgang veranlasst, d.h. die Bremsbeläge an die Bremsscheibe oder dgl. anpresst. Der Bremswunsch wird somit über mehrere Sensoren am Bremspedal aufgenommen und in entsprechende elektrische Signale umgewandelt. Daß hierbei auf relativ einfache Weise Zusatzfunktionen in die Steuerungselektronik integriert werden können, liegt auf der Hand. Als Beispiel für derartige Zusatzfunktionen sei eine Zielbremsung genannt, daneben aber auch jegliche Schlupfregelfunktion, wie ein Antiblockiersystem, aber auch eine Anfahr-Schlupfregelung mit Bremseneingriff, bei welcher ein Durchdrehen der Fahrzeugräder bei Beschleunigungsvorgängen allgemein verhindert wird.

Aufgrund der systemimmanenten "by-wire"-Entkoppelung an einer elektromechanischen Fahrzeug-Bremsanlage ist das Bremspedal offensichtlich physikalisch vom eigentlichen Bremssystem, in welchem die Bremskraft erzeugt und aufgebracht wird, getrennt. Daher kann der Fahrzeugführer grundsätzlich keine sog. haptische Rückmeldung durch das Bremspedal über den eigentlichen Bremsvorgang erhalten. Zwar ist es in diesem Zusammenhang bekannt, daß das übliche Bremspedalgefühl einer konventionellen hydraulischen Bremse über einen Bremspedalsimulator nachgebildet wird, wobei diese Pedalsimulatoren in der Regel aus Feder-Dämpferelementen, bspw. aufgebaut aus Gummi- oder Elastomerwerkstoffen, bestehen, wie die eingangs zweitgenannte DE 198 38 568 C1 zeigt. Mit den bislang bekannten Pedalsimulatoren wird jedoch nur ein üblicher Bremsvorgang widergespiegelt, d.h. eine einfache Bremsbetätigung entsprechend der gewünschten Bremskraft.

In der Erkenntnis, daß - wie oben ausgeführt wurde - eine am Bremspedal fühlbare, sog. haptische Rückmeldung über ein aktives Schlupfregelsystem grundsätzlich vorteilhaft ist, soll mit der vorliegenden Erfindung eine deutliche Verbesserung der bislang bekannten elektromechanischen Fahrzeug-Bremsanlagen mit einer Schlupfregelfunktion, die bei Auftreten von Radschlupf eine von der Bremspedalbetätigung abweichende Bremsen-Betätigung hervorruft, aufgezeigt werden (=Aufgabe der vorliegenden Erfindung).

Die Lösung dieser Aufgabe ist dadurch gekennzeichnet, daß bei Aktvierung einer derartigen Schlupfregelfunktion am Bremspedal ein Reaktionsverhalten erzeugbar ist, wie es ansonsten bei einer hydraulischen Fahrzeug-Bremsanlage üblich ist. Vorteilhafte Aus- und Weiterbildungen sind Inhalt der Unteransprüche.

Wie bereits erläutert wurde, besteht bei heutigen konventionellen hydraulischen Bremssystemen eine direkte hydraulische Koppelung zwischen Bremspedal sowie der hydraulischen Regeleinheit und den Radbremseinheiten. Aufgrund des Hydraulik-Volumenverbrauchs der Radbremse und während aller Schlupfregelvorgänge (bspw. der erläuterten ABS-Regelung, aber auch der ebenfalls bereits erwähnten sog. Anfahr-Schlupfregelung mit Bremseneingriff) treten hierbei aufgrund der hydromechanischer Vorgänge, nämlich aufgrund von Hydro-Pulsationen in den Hydraulik-Leitungen sowie bei Betrieb einer ABS-Rückförderpumpe Vibrationen und Veränderungen in/an der Lageposition des Bremspedals auf. Hingegen erhält durch die sog. "by-wire"-Pedalentkopplung der Fahrzeugführer bei einer elektromechanischen Fahrzeug-Bremsanlage nach dem Oberbegriff des Anspruchs 1 bislang keine haptische Pedalrückmeldung während Schlupfregelvorgängen am Rad.

Das ist insofern nachteilig, als nun der Fahrer im Vergleich zu konventionellen hydraulischen Bremssystemen keinerlei Rückmeldungen durch die Pedalstellung und die Modulationen am Bremspedal über die Reibverhältnisse zwischen Fahrzeugrad und Straße sowie über die genannte Regeltätigkeit der Schlupfregelfunktion erhält. Erfindungsgemäß soll nun, um diese Rückmeldung auch an einer elektromechanischen Fahrzeug-Bremsanlage darzustellen, bei Aktvierung einer derartigen Schlupfregelfunktion am Bremspedal ein Reaktionsverhalten erzeugbar sein, wie es ansonsten bei einer hydraulischen Fahrzeug-Bremsanlage üblich ist. In anderen Worten ausgedrückt bzw. bevorzugt soll dann das bei konventionellen hydraulischen Bremsanlagen bekannte, sog. Pedalpulsen quasi künstlich nachgebildet werden.

Bevorzugt kann bei einer elektromechanische Fahrzeug-Bremsanlage mit einem im wesentlichen übliche Bremsbetätigungskräfte am Bremspedal simulierenden Pedalsimulator das einer aktiven Schlupfregelfunktion bei einer hydraulischen Bremsanlage entsprechende Reaktionsverhalten direkt im oder am Pedalsimulator erzeugt werden. Hierzu können geeignete Zusatzelemente vorgesehen sein, so beispielsweise Piezoelemente oder Vibratoren, die zielgerichtet auf das Bremspedal einwirken, um das bei konventionellen Bremsen bekannte sog. Pedalpulsen nachzubilden.

Ein piezoelektrisches Aktivelement, bestehend bspw. aus einer Druckmembran, kann aber auch direkt auf der sog. Bremspedal-Trittplatte fixiert sein, quasi als Unterlage zum üblichen, am Bremspedal vorgesehenen Bremspedalgummi oder in diesem integriert. Dieses piezoelektrische Aktivelement kann dann im sog Schlupfregelfall, d.h. bei Auftreten von Radschlupf von einer zugehörigen elektronischen Steuereinheit geeignet aktiviert werden, so daß der Fahrzeugführer, der dieses Bremspedal betätigt, das bei einer hydraulischen Fahrzeug-Bremsanlage übliche Reaktionsverhalten verspürt.

In einer alternativen Ausführungsform kann dieses typische Reaktionsverhalten aber auch in den ohnehin vorhandenen Pedalsimulator eingespeist werden, der hierzu geeignet ausgebildet oder mit einem geeigneten Zusatzelement versehen ist, bspw. in Form einer elektromechanischen Rückstelleinheit mit direkter oder indirekter kraft- oder formschlüssiger Verbindung zum Bremspedal. Diese kann zusammengesetzt sein aus einem Elektromotor und einer Getriebeeinheit. Alternativ ist eine Ausbildung in Form einer elektrohydraulischen Rückstelleinheit möglich, die aus einem Elektromotor, einer Pumpe und geeigneten Ventilen besteht und direkt oder indirekt entweder auf das Bremspedal oder auf die Arbeitskammer eines hydraulischen Pedalsimulators geeignet einwirken kann.

Weiterhin ist zur Erzeugung des gewünschten Reaktionsverhaltens eine Magnetfelderregung möglich, bspw. mittels eines Elektromagnet-Paares, wobei sich ein erster Magnet bspw. direkt am Bremspedal befindet und der andere Magnet ortsfest in geringem Abstand von diesem fixiert ist. Durch geeignete elektrische Ansteuerung können sich die Elektro-Magnete pulsierend anziehen und abstoßen, auch kann das Lösen und Zurücknehmen durch eine Stromunterbrechung und eine Rückzugfeder oder dgl. erfolgen, so daß dann hierdurch der Fahrzeugführer, der dieses solchermaßen erregte Bremspedal betätigt, das bei einer hydraulischen Fahrzeug-Bremsanlage übliche Reaktionsverhalten verspürt.

Nach noch einer weiteren Ausführungsform kann das Bremspedal in seinem Aufhängungspunkt in einer elektroviskosen Flüssigkeit (bspw. in einem Mehrkammersystem) geführt sein. Bei üblicher Bremsenbetätigung ohne Auftreten von Radschlupf folgt dann das Bremspedal der Betätigung des Fahrzeugführers ohne jegliche Überlagerung einer anderen Bewegung. Bei Aktivierung einer Schlupfregelfunktion hingegen kann über eine geeignete Ansteuerung die elektroviskose Flüssigkeit abwechselnd in den jeweiligen Einzelkammern elektrisch angesteuert werden, wodurch entweder eine Vibrationsbewegung erzeugt werden kann oder wodurch sich eine anderweitige Modifikation im Bremspedal-Gefühl ergibt, so bspw. eine Verhärtung am Bremspedal bzw. bei dessen Betätigung, oder auch eine Verlängerung des Pedalweges.

Nachdem nun, wie beschrieben, die Erzeugung einer Pedalrückmeldung bspw. mit Zusatzelementen am Pedalsimulator einer elektromechanischen Fahrzeug-Bremsanlage möglich ist, können diese nicht nur prinzipiell vorgesehen, sondern insbesondere auch intelligent angesteuert werden. So kann zum einen eine komplette Zuschaltung dieser Zusatzelemente erfolgen, so daß der Fahrzeugführer permanent eine haptische Rückmeldung im Bremspedal bei allen Schlupfregelvorgängen erhält, was dann dem heutigen Zustand bei hydraulischen Fzg-Bremsanlagen entspräche.

Darüber hinaus kann aber auch eine Möglichkeit geschaffen werden, diese haptische Bremspedal-Rückmeldung komplett auszublenden, so daß der Fahrzeug-Führer dann keinerlei Pedalrückmeldung erhielte, was der heute bekannten "brake-by-wire"-Charakteristik entspricht. Eine entsprechende Wahlmöglichkeit, nämlich wahlweise das bei hydraulischen Bremsanlagen übliche Reaktionsverhalten auch an einem Bremspedal einer elektromechanischen Bremsanlage zu verspüren, oder alternativ eine Generierung dieses genannten Reaktionsverhaltens unterbinden zu können, kann dabei dem Fahrzeugführer nach seinem Wunsch bereitgestellt werden.

Werden die Zusatzelemente zur Pedalrückmeldung entsprechend konstruktiv ausgeführt, so kann diese auch verstärkt oder abgeschwächt werden. In Abhängigkeit von der gewünschten Auslegung kann somit das einer aktiven Schlupfregelfunktion bei einer hydraulischen Bremsanlage entsprechende Reaktionsverhalten im Vergleich hierzu verstärkt oder abgeschwächt werden. Dabei ist auch eine intelligente Ansteuerung dieser Pedalrückmeldung in Abhängigkeit des jeweils aktuellen Fahrmanövers unter Auswertung entsprechender fahrdynamischen Zusatzsensoren möglich, d.h. daß bspw. bei aktiver ABS-Funktion eine andere oder unterschiedlich intensive haptische Rückmeldung am Bremspedal spürbar ist, als bei einer aktiven Anfahr-Schlupfregelung.

Im übrigen kann die Pedalrückmeldung auch bei Überschreitung bestimmter systeminterner Größen aktiviert und ggf. verstärkt werden, so bspw. bei Übersteigen einer von einem geeigneten Beobachter bzw. Sensor ermittelten Grenztemperatur an einem Aktuator der elektromechanischen Bremsanlage, um hierdurch dem Fahrzeugführer eine Rückmeldung über diesen Belastungszustand zu geben.

Auch ist eine Einspeisung der Pedalrückmeldung bei Veränderungen im Langzeitverhalten der gesamten Bremsanlage, bspw. resultierend aus einem kontinuierlichen Absinken der elektrischen Energie in der systeminternen Bremssicherheitsbatterie oder bei Nichtvornahme eines Austausches verschlissener Bremsbeläge trotz entsprechender Hinweise, erfolgen, ebenso wie in einem unmittelbaren Fehlerfall in der elektromechanischen Bremsanlage. Dabei ist eine derartige Rückmeldung, insbesondere im letztgenannten Fall, d.h. wenn mit dem genannten Reaktionsverhalten auf systeminterne Abweichungen oder Fehler hingewiesen wird, je nach Schwere des detektierten Defektes zusätzlich im ungebremsten Zustand möglich.

Mit einer erfindungsgemäßen elektromechanischen Fahrzeug-Bremsanlage können somit im Sinne einer Zusatzfunktionalität alle Freiheitsgrade einer haptischen Bremspedalrückmeldung dargestellt werden. Darüber hinaus ist sogar eine zusätzliche haptische Rückmeldung bei systeminternen Abweichungen und Fehlern als Sicherheitszugewinn möglich, wobei noch darauf hingewiesen sei, daß dies sowie eine Vielzahl weiterer Details durchaus abweichend von obigen Erläuterungen gestaltet sein kann, ohne den Inhalt der Patentansprüche zu verlassen.

## Patentansprüche

1. Elektromechanische Fahrzeug-Bremsanlage mit elektronischer Übertragung eines mittels eines Bremspedales ausgelösten Bremsvorganges auf eine bevorzugt am Fahrzeugrad vorgesehene Bremse, sowie mit einer Schlupfregelfunktion, die bei Auftreten von Radschlupf eine von der Bremspedalbetätigung abweichende Bremsen-Betätigung hervorruft,
**dadurch gekennzeichnet, daß** bei Aktvierung einer derartigen Schlupfregelfunktion am Bremspedal ein Reaktionsverhalten erzeugbar ist, wie es ansonsten bei einer hydraulischen Fahrzeug-Bremsanlage üblich ist.

2. Elektromechanische Fahrzeug-Bremsanlage mit einem im wesentlichen übliche Bremsbetätigungskräfte am Bremspedal simulierenden Pedalsimulator nach Anspruch 1,
**dadurch gekennzeichnet, daß** das einer aktiven Schlupfregelfunktion bei einer hydraulischen Bremsanlage entsprechende Reaktionsverhalten im Pedalsimulator erzeugbar ist.

3. Elektromechanische Fahrzeug-Bremsanlage nach Anspruch 1 oder 2,
**dadurch gekennzeichnet, daß** das einer aktiven Schlupfregelfunktion bei einer hydraulischen Bremsanlage entsprechende Reaktionsverhalten mittels eines Vibrators oder eines Pieozoelementes erzeugbar ist.

4. Elektromechanische Fahrzeug-Bremsanlage nach Anspruch 1 oder 2,
**dadurch gekennzeichnet, daß** das einer aktiven Schlupfregelfunktion bei einer hydraulischen Bremsanlage entsprechende Reaktionsverhalten durch Magnetfelderregung mittels eines Elektromagnet-Paares erzeugbar ist

5. Elektromechanische Fahrzeug-Bremsanlage nach Anspruch 1 oder 2,
**dadurch gekennzeichnet, daß** das einer aktiven Schlupfregelfunktion bei einer hydraulischen Bremsanlage entsprechende Reaktionsverhalten mittels geeigneter Beaufschlagung von elektroviskoser Flüssigkeit in welcher das Bremspedal geeignet aufgehängt ist, erzeugbar ist.

6. Elektromechanische Fahrzeug-Bremsanlage nach Anspruch 1 oder 2,
**dadurch gekennzeichnet, daß** das einer aktiven Schlupfregelfunktion bei einer hydraulischen Bremsanlage entsprechende Reaktionsverhalten mittels einer elektromechanischen oder mittels einer elektrohydraulischen Rückstelleinheit erzeugbar ist.

7. Elektromechanische Fahrzeug-Bremsanlage nach einem der vorangegangenen Ansprüche,
**dadurch gekennzeichnet, daß** die Generierung des genannten Reaktionsverhaltens wahlweise unterbindbar ist.

8. Elektromechanische Fahrzeug-Bremsanlage nach einem der vorangegangenen Ansprüche,
**dadurch gekennzeichnet, daß** das einer aktiven Schlupfregelfunktion bei einer hydraulischen Bremsanlage entsprechende Reaktionsverhalten im Vergleich hierzu verstärkt oder abgeschwächt wird.

9. Elektromechanische Fahrzeug-Bremsanlage nach einem der vorangegangenen Ansprüche,
**dadurch gekennzeichnet, daß** mit dem genannten Reaktionsverhalten auch auf systeminterne Abweichungen oder Fehler hingewiesen wird.
